# EUROPEAN PATENT APPLICATION

(11) **EP 2 288 130 A1**
(43) Date of publication of application: **23.02.2011**
(21) Application number: 09010471.2
(22) Date of filing: 13.08.2009
(51) Int. Cl.: H04M 3/53

(54) **Context- and user-defined tagging techniques in a personal information service with speech interaction**

(71) Applicant: me2me AG, 6340 Baar (CH)
(72) Inventor: Lagadec, Roger, 8105 Regensdorf (CH); Estermann, Partik, 8603 Schwerzenbach (DE); Butera, Luciano, 8045 Zürich (CH)
(74) Representative: P&TS Patents & Technology Surveys SA

(57) **Abstract**

It is disclosed a method for centrally storing data in a remote server (4). Voice memos recorded by a user are converted into a text and classified with keywords extracted from said generated text and with metadata. The user (1) speaks a search command and at least one search item and a search engine (45) of the remote server (4) searches the keywords and the metadata of the plurality of voice memos in dependency with said at least one search item; the search engine (45) presents to the user (1) the found voice memo(s) and/or the generated text as a result of the search.

## Description

### Field of the invention

The present invention concerns a method for centrally storing data in a remote server. In particular, it concerns a method of recording, central storage and conversion to text of voice memos, tagging text converted voice memos with keywords and metadata and searching said voice memos by said user by speaking appropriate search commands.

### Description of related art

DE19953813A1 discloses an installation that consists of an access to a public communication network, an algorithm for voice recognition, a data processing unit, a database for data storage, a system clock as well as a terminal, and that processes telephone calls over a voice recognition algorithm in such a manner that person resp. performance bound conversation protocols are established and stored. There is also the possibility of recording a remote dictation. Simultaneously, a keyword search function of a normal text processing system is mentioned in order to allow the user to search a protocol thematically according to the conversation contents.

US20050159959A1 discloses a central, network-based voice memo recorder that includes a voice recognition function and that records conversations, and converts the voice message thus generated into a text message. The text message is made available to the user so that he receives a protocol of the conversation. The activation occurs over a special key, a menu or a voice command.

EP1225754 discloses a central server for voice messages, where the storing from a GSM or Internet terminal during a spoken dialogue is disclosed and that includes an automatic voice recognition and additional metadata, including the time and emotions. It is however a disadvantage that these messages are stored as audio files and not as text.

DE10330799A1 discloses a device for storing memos. This can occur for example as a box hanging on a wall in a kitchen or also as a mobile telephone. The embodiment given by way of example includes a voice recognition program in order to convert the spoken contents into text. The converted text can be displayed, printed or forwarded as SMS or email. There is however the disadvantage that no central data storing and no search possibilities are disclosed.

US6029063 discloses a network-based "Voice scratchpad", in particular for storing voice contents during a telephone connection or when the mobile telephone is in standby mode. US6038441A discloses the recording of a voice memo for use within a car with a local storage. It is also possible to store external incoming calls.

WO01848815 discloses a network-based memo dictation device with a separate connection to the memo server. US6671353 discloses a local dictation device in the mobile telephone with a special key for recording voice during a connection.

The method of EP1898617 involves recording a voice memo by a user with a telecommunication device of the user. The voice memo is converted into a text with an aid of a voice recognition system. The user is identified in a remote server, different memory areas of the remote server are allocated to different data e.g. e-mail, collected with the telecommunication device which are sent to the remote server and additionally stored in the memory area allocated to the user. The data are transmitted over an interface e.g. Bluetooth working at close range to the device of the user.

### Brief summary of the invention

It is an aim of the present invention to create an improved user interface of a Voice-and-Web Personal Information Service with speech interaction.

It is another aim of the present invention to create a method in which the searchability of the stored voice memo of the user is increased.

It is another aim of the present invention to create a method in which the search results of the search engine in a personal information service are better adapted to the circumstances, within the user is.

According to the invention, these aims are achieved by means of a method comprising the following method steps:
- voice memos are recorded by a user with a telecommunication device of the user;
- the voice memos are converted into a text with the aid of a voice recognition system;
- the user is identified in the remote server, different memory areas of the remote server being allocated to different users and
- the generated text is stored in the memory area of the remote server allocated to the user, the contents of the memory area being searchable by the user for a specific item of information, wherein
- the generated text of a plurality of voice memos is marked with keywords extracted from said generated text and with metadata;
- the user speaks a search command and at least one search item and a search engine of the remote server searches the keywords and the metadata of the plurality of voice memos in dependency with said at least one search item;
- the search engine presents to the user the found voice memo(s) and/or the generated text as a result of the search.

Advantageously said search engine searches additionally synonyms of the keywords and/or said metadata. Said synonyms can be predefined in a lexicon. The entries in said lexicon can be changed by the user by deleting or adding synonyms to the lexicon, which changes are applied the advantageously only to the search of the individual user who made the changes. Said synonyms can as well be defined by the user himself.

In another embodiment according to the invention are keywords which are used for retrieval by said search engine, proposed to the user and are validated by the user.

Said metadata can be file-generated metadata, which are generated during the generation of the conversion of the voice memo into text and/or user-defined metadata, which are created at the time of recording a specific voice memo or at a later stage. Still there is the possibility that said metadata is entry-generated metadata, which are reinterpreted according to the user's actual perspective.

In case where a combination of keywords and metadata is frequently used for voice memos, the metadata will always been used when the corresponding keyword has been found. In another embodiment the generation of keywords and metadata takes into account generated keywords and metadata from other users during the use of said search engine.

Additionally voice memos, which are not converted into text, can be searched on the basis of metadata associated with said non converted voice memos. Any additional data-files can be as well downloaded to the remote server, marked with keywords and metadata and taken into account by the search engine during the search.

During the search each search item can be considered by said search engine with equal weight during said search or search items which are closer to said search command can be considered by said search engine with a higher weight.

The retrieved results can be presented to said user in a visual, textual, vocal and/or acoustical form and with additional information, which inform the user as to which metadata and/or synonyms were actively used during the search.

The search engine can take into account the kind of identification of the user vis-à-vis the remote server and can take into account the interaction channel and with which device the user accesses the remote server. The offered service will preferably occur, when a user accesses a network-based voice message box.

According to the invention, these aims are independently achieved by means of a method comprising the following method steps:
- the user is identified in a remote server, different memory areas of the remote server being allocated to different users and
- the contents of the memory areas contain a variety of personal user dependent information, said information being searchable by said user for a specific item of information, wherein
- the user gives a search command and at least one search item and a search engine of the remote server searches the personal information in dependency with said at least one search item;
- the search engine presents to the user the specific personal information as a result of the search; wherein
- the search engine can take into account the kind of identification of the user vis-à-vis the remote server and/or take into account the interaction channel and with which device the user accesses the remote server.

The personal information can be the voice mails and the generated text and the searching can be done by speaking the search command. This embodiment can enclose all other features mentioned under the detailed description of the invention.

### Brief Description of the Drawings

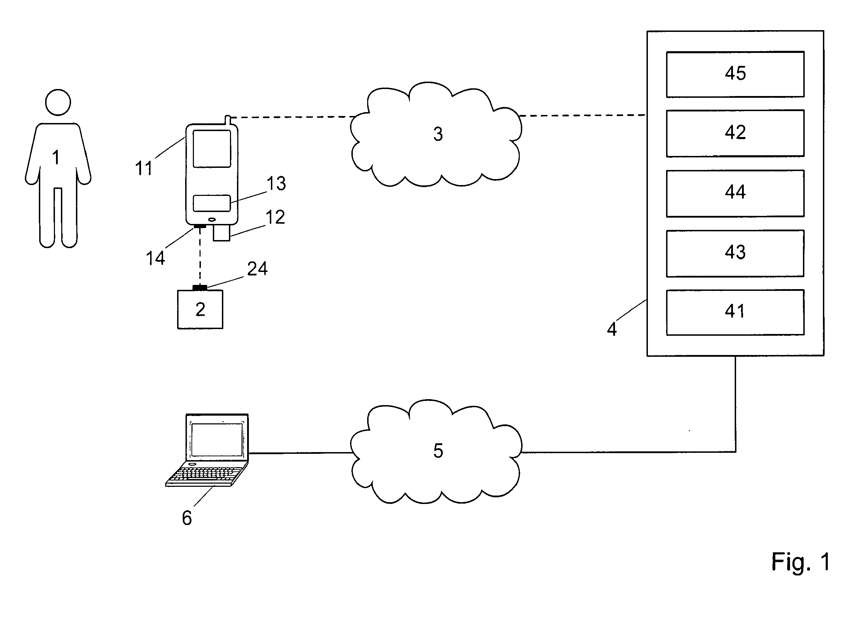

The invention will be described in more detail on the basis of the attached figures, where the single figure shows a system according to the present invention.

### Detailed Description of possible embodiments of the Invention

According to the invention, a method is disclosed for centrally storing text, memos and voice memos converted into text and further data in a remote server 4 by a user 1. In the illustrated embodiment, which is represented in the single figure, the user 1 is equipped with a mobile telephone, a PDA, a Playstation, a laptop or another telecommunication device 11 that is connected to a communication network 3. An identification module 12 is provided for identifying the telecommunication device 11 in the communication network 3, in the example indicated it is a SIM card in a mobile device in a mobile radio network. The identification module 12 can be removed (as a SIM card in a mobile telephone) or be built-in permanently. Different communication networks 3 are known from the prior art, for example a GSM, GPRS, HSCSD, EDGE, UMTS, CDMA network or cable TV or IP network, over which data can also be transmitted. Equivalent communication networks 3 can however also be used in the frame of the invention.

The remote server 4 is operated for example by the operator of the communication network 3 or by another service provider. It has a memory area 42 that is allocated to different users 1 and used by them. Each user, after a successful identification, can access his own part of the memory area 42 and on the texts and data stored there or leave his texts and data there. The remote server 4 is also connected with said communication network 3 or over the Internet 5 with the communication network 3.

In order to access his memory area 42 and be able to store data or texts or search the stored data and texts, each user 1 must however in a first step be identified vis-à-vis the remote server 4. Identification can occur via said identification module 12 of the telecommunication device 11, via a caller identification (Caller-Line-Identification CLI), via biometric parameters (fingerprints, iris or retina scan, etc.) and/or via a password vis-à-vis the remote server 4. It is also known that the voice of the user 1 can be used as biometric parameter if the user records a voice memo or communicates with the system through a voice-operated menu. In this manner, it is possible to distinguish between several users of a device or of an identification module, for example in a family or if several persons speak in a conversation. The identification of the user 1 can depend on the device used, as it is conceivable to offer the user further access to the remote server 4 and to his personal memory area 42. In the single figure, the remote server 4 is additionally connected with the Internet 5 and an Internet terminal 6. The user identification vis-à-vis the remote server 4 can also depend on the devices 11, 6 and, in one embodiment, is chosen and set by the user 1 in personal settings. The Internet terminal 6 can be provided with an identification module 12.

In a first step, the described system knows the function of recording voice memos of the user 1. The user 1 can easily use his telecommunication device 11 for this by connecting with the remote server 4, being identified vis-à-vis the remote server 4 and confirming a recording function. The user connects with the system, records the things he wishes to record and stores these in his personal memory area 42. It is also possible to record conversations in the vicinity of the telephone, telephone calls made with the telecommunication device, conferences or other voice messages, which are then stored by the user 1 in the remote server 4. Telephone conversations are either recorded systematically, or only if a corresponding command, for example over DTMF or as voice command is entered by one of the participants. It is also possible that the recording begins automatically if certain conditions are fulfilled, for example if certain words are spoken or certain numbers are called. The dialogue with the IVR (Interactive Voice Response System) in the remote server can be heard from both participants or only from the participant who has instructed the remote server, this decision being made with a command from the participant. Furthermore, it is possible to record either only what has been spoken by the owner of the telecommunication device or what has been spoken by all participants in the conversation. It is also possible that several participants record simultaneously and separately a dialogue in the same remote server.

In order to make the stored data searchable, there is either in the telecommunication device 11, in the remote server or in another part of the communication network 3 a voice recognition system 13, 41 that analyzes the recorded voice memo and converts it into text. The text generated in this manner is stored in a memory area 42 of the remote server 4 allocated to the user 1. The user can also use the Internet terminal 6 for recording the voice memo and/or the conversation.

The used voice recognition system 13, 41 can use user-dependent language models that have been previously generated and stored centrally. Since the user 1 is identified in every case, it is possible to revert to the stored, user-dependent language models. Thanks to newly recorded voice memos of the user 1, it is possible to simultaneously develop new language models for the user. By identifying the user and using user-dependent language models, the reliability of the voice recognition can advantageously be increased. The automatic recognition of the language simultaneously allows the language recognition system 13, 41 to be used independently of the used language.

The recording procedure in the memory area 42 can be initiated in different ways. In a simple embodiment, the user selects a number that connects him with the remote server 4. It is also conceivable that a preprogrammed key on the telecommunication device 11 is provided for activating resp. deactivating the recording function or other functions within the remote server 4. In another embodiment, the user 1 must install a Java-applet or another small program on his telecommunication device 11 before he can use the service. This program offers the user 1 a menu or a voice menu in order to reach the service's different functions. It is possible to access from different devices the user's own account stored on the remote server 4. Access over the Internet 5 and thee computer 6 is also conceivable.

According to the invention, in addition to the voice memos converted into text, data are transmitted over an interface 14, 24 working at close range to the telecommunication device 11 of the user 1 and sent over the telecommunication device 11 to the remote server 4. These data are also stored in the memory area 42 allocated to the user 1. It is advantageous for this to occur automatically or semi-automatically. Said Java-applet or program is in charge of receiving the data in the telecommunication device and forwarding them to the remote server 4. If the program can access data in the identification module 12 or other identification data of the user 1, the program can simultaneously perform the identification of the user 1 vis-à-vis the remote server 4. In this case, the user simply enters an <*ok*> in his telecommunication device for receiving and forwarding the relevant data. In another embodiment, the user enters his password for identification and then enters his <*ok*>. The program can also record metadata, which will be explained in more detail further below, in the telecommunication device 11 and cause the metadata to be forwarded together with the data to the memory area 42 of the remote server 4 allocated to the user 1.

As interface working at close range, a large number of interfaces are known to the one skilled in the art, such as Bluetooth, infrared, HomeRF, NFC (Near Field Communication), W-LAN etc. Other equivalent interfaces known in the prior art can also be used for the invention. Wireless or also wired interfaces (such as USB) are conceivable within the frame of the invention. Activating the connection and initiating the transmission to the server can in principle originate from both parties, the telecommunication device 11 or the external device 2 of the participating third party and also include an active authorizing of the user 1 by pressing on a key, menu selection or voice command. A mode in which a telecommunication device continuously scans external devices and searches for information that fulfill predetermined criteria for a transmission to the remote server is also conceivable.

In one embodiment, for additional data, receipts or cash receipt vouchers for performed transactions or bought goods are transmitted from a point of sale to the telecommunication device 11. The cash receipts show a detailed inventory of the bought goods. If these receipts are stored, the user can advantageously revert to the data at a later moment and search these in the memory area for the voice memos. If he is no longer sure which goods he bought the last time, he can simply search in the shop where he connects to his memory area 42 over the telecommunication device 11. The external device 2 in this case is the shop till that transmits the data to the telecommunication device 11. Another example such as the transmission of the working hours from the external device 2 over the interface 14, 24 to the telecommunication device 11 are conceivable, so that no further time recording is necessary. Another example is the storing of ring tones, logos of broadcast SMS or other data that are sent to the telecommunication device 11 over the interface 14, 24 at close range. If the user finds himself in front of an advertisement billboard and is connected with this billboard over Bluetooth, etc. he can receive this advertisement over this billboard in his mobile telephone and also store it in the remote server 4.

Documents that arrive in the server 4 over a contactless interface 14, 24 and the user device 11 are preferably in text format or in another searchable format or are converted into such a format. Data that are received over an interface 14, 24 can also be linked with voice memos that are already available in the remote server 4 or with newly generated voice memos and stored as a kind of attachment.

Furthermore, it is conceivable in a further embodiment to send further data that are available to the user or his telecommunication device to the remote server and to store them in the memory area 42 of the remote server 4. These data include for example copies of all sent or received SMS, MMS, e-mails, photographs that have been taken with the camera of the telecommunication device 11, the telephone directory of the user 1 in the telecommunication device 11 or also entries in a calendar in the telecommunication device 11, or measurements from sensors in the telecommunication device 11. Information that are determined within the network can also easily be stored in the remote server 4. These contain among others indications about incoming or outgoing calls, the costs of these connections, the starting and ending times, duration, state of the user (busy/unavailable/in roaming etc.), other information from the CDRs (Call Detail Records), visited websites, indications about connections established over Bluetooth or VoIP etc.). Messages that are stored for the user 1 in a personal network-based voice message box (Voicemail) 43 can also be stored in the remote server 4 or be copied thereto. In the single figure, the network-based voice message box 43 is also located in the remote server 4. This is however not absolutely necessary and it can also be in any other part of the communication network 3 or in the user device.

As the user 1 can also connect with the remote server 4 over a computer 6 and the Internet 5, data that are generated or stored in the computer 6 can in principle be copied into the memory area 42 automatically or upon confirmation of the user. These could thus be data (e-mails, address book, calendar function etc.) of an e-mail program, general text documents, data from a VoIP service of the user 1 and/or data originating from an Internet chat.

A "data file" within the memory area 42 is, for example, a text file (.doc, .txt, .rtf), an Excel file (.xls), a pdf file (.pdf), or a picture file (.gif, .jpg....). Within this definition of data files, we can further differentiate between data files with some text content (.doc being an obvious example), and data files without any text content (say, .jpg). Additionally, data files carry text or text-like attributes such a file name (*"name"*), a creation date, an indication of file size, which can be described as file-generated metadata or tags, indicating that such information is created automatically as the file is created by a device or acquired by another device. File-generated metadata can identify a picture file's size or date of creation, but cannot carry only limited information on picture content, picture taking context and the like - unless the user, with support from an electronic device, has specifically entered such information.

In order to store all the texts and data, different possibilities are available within the frame of the invention. In a first embodiment, all documents are converted into a searchable format, for example text, including XML, and stored, so that the information can easily be searched. The remote server 4 is provided with a search engine 45 in order to search the keyword(s) and the metadata of the plurality of in text converted voice memos in dependency with the search items spoken by the user 1. It is still possible to access the search engine 45 from the Computer 6 and make the search in a written form. The result can be immediately given to the user by speaking the voice mail, showing the generated text, sending an SMS, an Email, etc.

Simultaneously, the associated audio file *.wav, *.mp3 etc. belonging to the text is stored in the memory area 42. The user 1 thus has the possibility to listen once again to the document at a later point in time if necessary. In a further embodiment, the associated audio file is stored only in the memory area if there are doubts during the voice recognition as to the accuracy of the recognized text.

Simultaneously, it is possible to attribute different kind of metadata to the stored documents and to store them together. As the mentioned file-generated metadata, data are suitable such as for example the date, start time, duration and location of the recording, the outside temperature on that day, or the used recording device. The location can be determined itself in the terminal, for example with a GPS receiver, or in the telecommunication network.

Additionally tagging by user-generated metadata is a technique which allows additionally users, both at the time of data file generation and at later times, to add identifying information to data files, thus facilitating their retrieval via search engines and their management. In the case of data files without text content, tagging is the only technique allowing a direct retrieval based on user-relevant information. A picture tagged, for example, with metadata such as "castle", "Waterford", and "Barbara" can more easily be retrieved than when only a creation date is available.

As a user-generated metadata the mood or frame of mind of the user 1 can additionally be associated to the text. If voices of several persons are stored in a memory area (for example participants to a telephone conversation), the system can also distinguish these people from one another and store a corresponding indication ("Participant 1 says: "). The user can also name the persons and the system can learn how the corresponding participant 1 is called.

Tagging with user-generated metadata is especially important in retrieving user-generated entries, as the user can, in this way, add contextual information to his entries without otherwise modifying the entries themselves. For example, the entry "meeting in Helsinki with Patrik" may be additionally tagged with "tentative" and "business" as metadata to indicate the general context within which the entry was made.

Tagging can as well be with entry-generated metadata, which can be "re-interpreted" to match the user's actual perspective. For example, an entry-generated metadata carrying the information "May 10, 2009" may be invoked, on May 15, 2009, as "last week", and, on June 10, 2009, as "last month". Entry-generated metadata will either be taken from the filed-generated or the user-generated metadata, but the system automatically recognizes that the meaning changes in time and the user's present situation.

Under the obvious condition that the spoken information has been accurately recognized and converted into text, retrieval can take place based on what is called "partial context". If, for example, the user makes an entry by speaking the utterance "meeting in Helsinki with Patrik", then retrieval of the utterance (and possibly of other utterances or information sharing the same partial content) can be achieved, for example, via a command such as "search meeting" or "search Helsinki". One simple technique for supporting this type of retrieval is to store all entries made by one individual user in a database (not shown in the Fig.) with a single-word-oriented data structure. When such entries are retrieved through voice interaction, it is useful to be able to treat simple entry-generated metadata in exactly the same way as partial content.

The tagging with the mentioned metadata can also be extended, though, to pre-selected synonyms or "quasi-synonyms" for any metadata made. In this way, the above entry "meeting in Helsinki with Patrik", may also be successfully retrieved via the command "search appointment", if the search rules have been defined in such a way that "appointment" and "meeting" are treated as equivalent.

The synonyms of keywords are predefined and stored in a lexicon 44, which is available to all users of the remote server 4. This lexicon 44 predefines expressions, which will be taken into account, when the users conduct a search. Additional the user can edit the lexicon 44 and delete synonyms or add additional synonyms or keywords and their various synonyms, which then will be taken into account. However, these changes will only be applied for the user who is editing the changes and not for other users. Thus they are saved only in the memory area 42 of the user. As the entire system is speech based such editing can be done by accessing the remote server and simply speaking the desired changes. A voice based menu will guide the user and help him to make these changes. An Other possibility is of course that the user is accessing the remote server 4 via computer 6 and editing the lexicon according to his wishes. The user can of course define the language(s) in which the lexicon 44 is used, which is/are then the language(s) for the voice mails.

An entry made yesterday (i.e. with an entry-generated metadata with yesterday's date), with the full content "meeting Patrik Winterthur" and with user-generated metadata "response time" and "recording". This entry could be retrieved using "meeting" and "last week", the result being:
- "meeting Patrik Winterthur", entered "21.05.2009", "response time" and "recording".

More simply, retrieval could be reduced, say as follows:
- "meeting Patrik Winterthur", yesterday.

If the search had been done based on "appointment" instead of "meeting" (assuming "appointment" to be used by the service as a synonym to "meeting"), the result might still be:
- "meeting Patrik Winterthur", yesterday.

However, a more appropriate visual representation of the result might be:
- "meeting Patrik Winterthur", yesterday
which indicates that a result has been retrieved but that it was based on a synonym.

Similarly, the word "yesterday" might be highlighted to indicate that the query stipulated "last week" but the retrieved information contains an additional clarification. A similar technique might be used of results are delivered via voice, say by changing the voice, or adding another type of vocal emphasis.

Another example might be based on the two existing entries:
- "meeting Patrik Winterthur", tagged with metadata "response time" and "recording"
- "meeting simulation review", tagged "Patrik" and "validation".

A search based on "meeting" and "Patrik" might then yield the verbose result:
- "meeting Patrik Winterthur", yesterday, tagged "response time" and "recording"
- "meeting simulation review", "15.05.2009", tagged "Patrik"

The result is verbose because date may not matter, and because tags which have not been needed in retrieval may be perceived as unimportant for the retrieval task at hand.

An alternative might thus be:
- "meeting Patrik Winterthur", yesterday "meeting simulation review", "15.05.2009", "Patrik".

The advantage from this selective representation of retrieval results is to convey information about the actual way in which information has been stored with respect to the way its retrieval has been attempted, without increasing response time or verbosity, thus contributing to a user's more accurate mental picture of his data collection.

Finally, the more effective way to support the retrieval of entries is to let the user treat partial content, entry-generated metadata and user-generated metadata in exactly the same way, i.e. interchangeably and without any constraints as to structure, number of occurrences per category, sequence within the search string (= the sequence of words following the identifier "search"; = the string of keywords). In other words, a search might be based on "search Helsinki last week tentative", or, with identical results, on "search last week tentative Helsinki".

Independently, there is also the option of giving the earlier keywords in the search string a higher weight than is given to keywords occurring later in the search string, with an impact, for example, on the sequence in which found entries matching the string of keywords will be presented to the user.

The above refers (with the minor exception of entry-generation tags which can be "reinterpreted" to match the user's perspective) to actually, explicitly defined and correctly recognized entries.

While a flexible use of partial content, synonyms, and metadata gives the user significant advantages in retrieving data from his personal information collection, the added flexibility has the side effect of obscuring the actual content of the retrieved data.

Thus, advantageously the presented solution consists of:
- performing a retrieval of data (personal or not) ("search") based interchangeably on "partial content" and/or their synonyms, entry-generation metadata and/or their synonyms, and/or user-generated metadata and/or their synonyms and then
- representing the retrieval results with additional information (visual, textual, vocal, acoustical...) which inform the user as to which user-generated metadata and/or synonyms were actively used in retrieving the data thus allowing the user significant flexibility in retrieval while informing him tersely about the actual way in which the retrieved data are stored.

Thus, the above technique allows for a wide range of possibilities in retrieving data over a very simple, voice- or text-based interface, while giving the user a clear indication of how retrieval was achieved and thus contributing to an accurate "mental picture" of the user's actual data.

Individual files can be marked with a watermark, which makes the search for the document easier or can prove the origin or authenticity of the document. The data received over the interface 14, 24 can also be provided with a time stamp or an electronic signature (as metadata).

All documents can be stored in principle unorganized, for example chronologically in the order they were recorded, or depending on different criteria (size of the document, transmission costs, available memory space etc.). It is thus no longer necessary to have a relational or complex database system. The possibility is additionally given to the user to edit the stored texts and data from his mobile device 11 or computer 6 and to classify them as he wishes. The documents can also be indexed or subscripted.

Finally, there is a possibility of deriving possible keywords (of course, keywords different from the partial content) from the entries themselves, and to use them for retrieval, possibly after having proposed them to the user and validated by him. For example, if a significant number of entries featuring "Patrik" as partial content have been tagged "business", it may make sense to always associate both terms, and to retrieve "meeting in Helsinki with Patrik" based on "search business yesterday".

The mechanism of associating explicitly generated keywords with other synonyms or keywords such as statistically correlated, semantically related, user-defined, system-proposed or user-validated keywords can be one restricted exclusively to each user's individual entries, or it can alternatively take into account the behavior of a number of users of the same application, or it can combine both approaches.

The above has been based on entries which have been spoken and are assumed to have been speech-recognized. In voice-based entries, there may exist the option of entries without transcription, in which case the database entry (within a suitably extended data model) will not contain and partial content in the form of text (this may be useful, when using words which have a low probability of being accurately recognized, or when using a language not covered by the application's speech-recognition resources). Retrieval of such spoken, but untranscribed entries will be based only on entry-generated and on user-generated metadata (one entry-generated tag certainly indicating that the entry was not transcribed).

With the disclosed metadata used as a tagging, access to personal information is much less error-prone and requires less discipline and rigor.

In all mentioned embodiments, the user 1 has the possibility of indicating in a user profile the settings he desires in relation to the storage of the data. The user can also provide different texts and data with different access rights for different persons or groups. In this manner, the user can selectively give his/her family, friends or colleagues the authorization to access the stored data. These persons can log into the remote server in the same manner as the user 1: through a telecommunication device 11 over a communication network 3 or through a computer 6 and the Internet 5. Access to the documents in the remote server 4 is thus also always possible even if the user has lost his telecommunication device 11 or if it has been damaged. Some documents can also be marked as secret or only accessible to the user so that no other person but the user 1 himself can access these documents.

For the search, different possibilities are available according to the invention. The user can activate a search engine with the telecommunication device 11 or the computer 6 and search the documents in his memory area on the basis of keywords. Keywords allow not only the contents of the stored documents to be searched but also said metadata (for example the time or location) that characterize these data. The search engine will preferably be operated by the operator of the server and indexes only the documents in this server. A user can only search for documents that are contained in his personal memory area or at least for documents for which he has reading access rights.

The search engine can also have a voice-controlled menu. This possibility offers itself in particular if a voice channel is available that can be used by the user 1. Access to the data can occur manually at a point in time chosen by the user when he searches for a particular item of information. In all the above, the central element is to offer the user the freedom of choice (or the lack of interaction constraint) of treating partial content words (and their possible synonyms and quasi-synonyms), entry-generated metadata (and their possible synonyms and quasi-synonyms) and user-defined metadata (and their possible synonyms and quasi-synonyms) in exactly the same way when defining a retrieval via voice interaction. An automatic or semi-automatic access can also be provided. In this case, an alarm function could remind the user about a deadline or it could be a criteria (e.g. location or event) preset by the user. This access can be indicated by the user for example in the user options(or settings). In a further embodiment, access to the data can also occur over the network-based voice message box 43.

The data of a calendar program such as Outlook can be stored in the remote server 4 resp. the remote server 4 can be synchronized with a calendar program such as Outlook. As long as the location of the recorded documents is known, they can be processed geographically and represented on a map and questions such as "What memo did I record in Kreuzberg? Where is my KaDeWe receipt? How expensive was the coffee in Venice?" can be answered more easily with the aid of the map.

From the mobile device 11, the user 1 can access his data and browse through them over a voice-controlled menu, over a WAP function, by sending an SMS etc. The results can be received as text (WAP, SMS, USSD, etc.) and displayed to the user. If an audio file is available, the user 1 can play this original file with the originally recorded information. A text file can also be synthesized with the voice of the user or of another possibly known or famous voice. Use of a computer 6 will give additional possibilities. The user can access a search result over an Internet site or it can be sent to him as e-mail. In principle, the data can be represented here too as text or (if available) as audio file.

Use of the personal memory area 42 for storing the text and the data can be billed to the user by a service provider. The manner in which the costs are billed can differ. One possibility consists in a comprehensive fee for using the service, e.g. as part of his monthly subscription fee for the telecommunication device 11. A billing according to the used memory space or only for the transmitted data volumes when storing or searching and playing back the data is conceivable. In another embodiment, there is a fixed fee for each sent or played back message. Depending on a user profile, according to one or several performed searches or depending on the contents of a stored text or of the stored data, it is possible in a further embodiment to send some advertising to the user.

The remote server 4 with an IVR system can also be called by the user in order to access additional, possible user-specific services and applications. A central calendar program, in which appointments are entered over voice commands or that notes appointments automatically based on the contents of the voice memos, is also possible. As a further interesting application, one can consider a central, network-based call assistant with which calls can be established, telephone directories managed and voice messages listened to. Accessing these additional functions can for example occur over special voice commands. It is particularly advantageous if these additional applications can also access the contents of the voice memos and the extended searching possibilities of the remote server; commands such as "please call the number in the voice memo of yesterday afternoon" or "I had a meeting in Bern last week; can you please read the corresponding voice memo?" can be entered and be correctly interpreted by the remote server.

Another service can be described as providing to the individual user 1 to access to the data stored in the memory area 42, based on individual requests, but possibly yielding different results based on past behavior, preferences on differences in the stored data, etc. Such a personal information service as disclosed in the present application must allow the user 1 to store and retrieve information. Ideally, accessing the personal data stored in the memory area 42 should be supported by a broad range of interaction channels such as Internet 5, voice connection, mobile or landline phone, Personal Computer 6, Instant Messaging device, VoIP phone, etc., while always and conveniently relating the interactions of one given user with the same data set.

According to this aspect of the present invention, the search engine takes into account the following two aspects and delivers different search results to the user 1 according to
1. Consistency in data set identification, based on pre-recorded information concerning the user's interaction channels (MSISDN, MAC address, IP address, ...) and/or the user's identity (user name or password, shared secret...), and
2. The kind of interaction channel (phone 11, PC 6, other device) and modes (voice, sound, text and graphics, multimodal...). The channels are essential to the efficient and user-friendly deployment of a personal information service.

The entry of personal information should, for reasons of ergonomics and user acceptance, be designed for simplicity, while ensuring reliable retrieval.

In the case of depositories containing no information that has been generated by the user, they can be implemented with a personalized, user-specific retrieval tool (closer to the user) or interpretation tool (closer to the depository) which attempts to match retrieval requests with information specifically related to the individual user.

According to the invention, these aims are independently achieved by means of a method comprising the following method steps:
- the user 1 is identified in a remote server 4, different memory areas 42 of the remote server 4 being allocated to different users 1 and
- the contents of the memory area 42 contain personal user dependent information, such as said voice mails and said text generated from said voice mails, said information being searchable by said user for a specific item of information, wherein
- the user 1 gives a search command and at least one search item and a search engine 45 of the remote server 4 searches the personal information in dependency with said at least one search item;
- the search engine 45 presents to the user 1 the found voice memo(s) and/or the generated text as a result of the search; wherein
- the search engine can take into account the kind of identification of the user vis-à-vis the remote server and/or take into account the interaction channel and with which device the user accesses the remote server.

The personal information can be the voice mails and/or the generated text and the searching can be done by speaking the search command. This embodiment can be using all other features mentioned under the detailed description of the invention.

### List of references

- 1: User
- 11: Telecommunication device
- 12: Identification module
- 13: Voice recognition system
- 14: Interface working at close range
- 2: External device
- 24: Interface working at close range
- 3: Communication network
- 4: Remote server
- 41: Voice recognition system
- 42: Memory area
- 43: Voice message box of the user 1
- 44: Lexicon of synonyms
- 45: Search engine
- 5: Internet
- 6: Computer, Internet terminal

## Claims

1. Method for centrally storing data in a remote server (4), comprising the following method steps:
• voice memos are recorded by a user (1) with a telecommunication device (11) of the user;
• the voice memos are converted into a text with the aid of a voice recognition system (13);
• the user (1) is identified in the remote server (4), different memory areas (42) of the remote server (4) being allocated to different users (1) and
• the generated text is stored in the memory area (42) of the remote server (4) allocated to the user (1), the contents of the memory area (42) being searchable by the user (1) for a specific item of information, wherein
• the generated text of a plurality of voice memos is marked with keywords extracted from said generated text and with metadata;
• the user speaks a search command and at least one search item and a search engine (45) of the remote server (4) searches the keywords and the metadata of the plurality of voice memos in dependency with said at least one search item;
• the search engine (45) presents to the user (1) the found voice memo(s) and/or the generated text as a result of the search.

2. The method of claim 1, wherein said search engine searches (45) additionally synonyms of said keywords and said metadata.

3. The method of claim 2, wherein said synonyms are defined in a predefined lexicon (44) and/or defined by the user (1).

4. The method of claim 3, wherein the lexicon (44) is changed by the user by deleting or adding synonyms to the lexicon (44), which changes are applied only to the search of the individual user (1) who made the change.

5. The method of any of the claims 1 to 4, wherein keywords which are used for retrieval by said search engine (45), are proposed to the user and are validated by the user.

6. The method of any of the claims 1 to 5, wherein said metadata is file-generated metadata generated during the generation of the conversion of the voice memo into text and/or user-defined metadata, which is created at the time of recording a specific voice mail or at a later stage.

7. The method of any of the claims 1 to 5, wherein said metadata is entry-generated metadata, which is reinterpreted according to the user's actual perspective.

8. The method of any of the claims 1 to 7, wherein in case a combination of keywords and metadata is frequently used for voice memos the metadata will always be used when the corresponding keyword has been found.

9. The method of any of the claims 1 to 8, wherein the generation of keywords and metadata takes into account generated keywords and metadata of other users during the use of said search engine (45).

10. The method of any of the claims 1 to 9, wherein said search engine (45) searches additionally voice memos, which are not converted into text, only on the basis of metadata associated with said non converted voice memos.

11. The method of any of the claims 1 to 10, wherein additional data-files are downloaded to the remote server (4), marked with keywords and metadata and taken into account by the search engine (45) during the search.

12. The method of any of the claims 1 to 11, wherein each search item is considered by said search engine (45) with equal weight during said search.

13. The method of any of the claims 1 to 12, wherein search items which are closer to said search command are considered by said search engine (45) with a higher weight during said search.

14. The method of any of the claims 1 to 13, wherein the retrieved results are presented to said user in a visual, textual, vocal and/or acoustical form.

15. The method of any of the claims 1 to 14, wherein the retrieved results are presented to said user with additional information, which inform the user (1) as to which metadata and/or synonyms were actively used during the search.

16. The method of any of the claims 1 to 15, wherein the search engine (45) takes into account the kind of identification of the user (1) vis-à-vis the remote server (4).

17. The method of any of the claims 1 to 16, wherein the search engine (45) takes into account the interaction channel and device (11, 6) with which the user (1) accesses the remote server (4).

18. The method of any of the claims 1 to 17, wherein the access to the remote server (4) and to the search engine (4) occurs over a network-based voice message box (43) of the user (1).

19. Method for centrally storing data in a remote server (4), comprising the following method steps:
• the user (1) is identified in said remote server (4), different memory areas (42) of the remote server (4) being allocated to different users (1) and
• the contents of the memory area (42) contain personal user dependent information, said information being searchable by said user for a specific item of information, wherein
• the user (1) gives a search command and at least one search item and a search engine (45) of the remote server (4) searches the personal information in dependency with said at least one search item;
• the search engine (45) presents to the user the specific personal information as a result of the search; wherein
• the search engine (45) can take into account the kind of identification of the user vis-à-vis the remote server (4) and/or take into account the interaction channel and device (6, 11) with which the user accesses the remote server (4).
